# FASCICULE DE BREVET EUROPEEN

(11) **EP 2 550 728 B1**
(45) Date de publication et mention de la délivrance du brevet: **03.05.2017**
(21) Numéro de dépôt: 11710710.2
(22) Date de dépôt: 23.03.2011
(51) Int. Cl.: H02M 3/335, H02M 1/42, H02M 7/217

(54) **CONVERTISSEUR ALTERNATIF/CONTINU A ISOLEMENT GALVANIQUE**
Gleichrichter mit galvanischer Isolierung
AC/DC CONVERTER WITH GALVANIC ISOLATION

(30) Priorité: 23.03.2010 FR 1052089
(43) Date de publication de la demande: 30.01.2013
(73) Titulaire: Safran Electronics & Defense, 92100 Boulogne-Billancourt (FR)
(72) Inventeur: FOURMONT, Tony, 92100 Boulogne-Billancourt (FR)
(74) Mandataire: Lavialle, Bruno François Stéphane
(86) Numéro de dépôt international: PCT/EP2011/001431
(87) Numéro de publication internationale: WO 2011/116942

(56) Documents cités:
- FR-A1- 2 925 790
- US-A- 4 276 587
- US-A1- 2009 212 758
- SCHMIDT O R ED - INSTITUTE OF ELECTRICAL AND ELECTRONICS ENGINEERS: "QUASI RESONANT AC/DC FORWARD CONVERTER WITH SINUSOIDAL INPUT CURRENT", PROCEEDINGS OF THE INTERNATIONAL TELECOMMUNICATIONS CONFERENCE (INTELEC). VANCOUVER, OCT. 30 - NOV. 3, 1994; [PROCEEDINGS OF THE INTERNATIONAL TELECOMMUNICATIONS CONFERENCE (INTELEC)], NEW YORK, IEEE, US, vol. CONF. 16, 30 octobre 1994 (1994-10-30), pages 345-350, XP000623351, ISBN: 978-0-7803-2035-2

## Description

La présente invention concerne un convertisseur alternatif / continu à isolement galvanique utilisable par exemple sur le réseau de distribution électrique d'un aéronef.

### ARRIERE PLAN DE L'INVENTION

Dans un avion, l'énergie électrique est fournie par un alternateur entraîné par le moteur de l'avion. L'alternateur délivre une tension alternative convertie en tension continue pour être exploitée par les équipements électriques embarqués dans l'avion.

Dans sa version la plus simplifiée, la conversion est réalisée au moyen d'un transformateur comportant un enroulement primaire relié à l'alternateur et un enroulement secondaire relié à un pont redresseur associé à un condensateur de filtrage. La tension en sortie du pont redresseur est en sinusoïde simple alternance, plus ou moins filtré selon le condensateur de filtrage. La tension primaire reste sinusoïdale double alternance tandis que le courant consommé est soumis à une forte distorsion qui provoque une baisse du rendement du transformateur et de l'alternateur, un échauffement des conducteurs et un rayonnement électromagnétique à haute fréquence source de parasites.

Un moyen pour remédier à cet inconvénient est de réaliser un filtrage en série sur le circuit primaire du transformateur. Toutefois, cette option n'est pas adaptée lorsque la fréquence de la tension alternative est variable, comme dans le cas d'un alternateur entraîné par une turbine de réacteur pour lequel la fréquence varie de 360 Hz à 800 Hz environ.

Il est également connu de recourir à un circuit de correction de facteur de puissance ou PFC (« power factor corrector ») pour réduire la distorsion en forçant le courant consommé à suivre une forme d'onde identique à celle de la tension d'entrée, à savoir une sinusoïde redressée double alternance. Il existe différentes structures de PFC.

Dans la structure de type « BOOST », le circuit ne comporte pas d'isolement galvanique obligeant à associer à ce circuit un convertisseur continu / continu assurant cette fonction. Cet ensemble présente un rendement total relativement faible, ainsi qu'un encombrement et un poids élevés.

Dans la structure de type « FLYBACK », le circuit comprend un transformateur d'isolement dont les enroulements primaire et secondaire sont de sens opposés. Le fonctionnement des circuits PFC de ce type entraîne périodiquement le stockage d'une grande quantité d'énergie dans le noyau magnétique du transformateur. Il est donc nécessaire d'utiliser de gros transformateurs pour les fortes puissances, ce qui augmente la masse et l'encombrement du circuit.

Dans la structure de type « FORWARD », le circuit comprend également un transformateur d'isolement mais dont les enroulements primaire et secondaire sont de même sens. Dans ce type de circuit, il n'est pas possible d'exploiter le courant sur la totalité de la sinusoïde obtenue et donc de consommer un courant suivant la forme d'onde de la tension d'entrée.

En vue de fournir des performances améliorées, il est prévu dans le document FR-A-2925790 un convertisseur alternatif / continu, comportant en entrée un circuit redresseur raccordé en série à un enroulement primaire d'un transformateur d'isolement et à un commutateur de découpage relié à un circuit de commande par modulation de largeur d'impulsion, le transformateur d'isolement comprenant un premier enroulement secondaire qui est de sens identique à l'enroulement primaire et qui est relié à une ligne de sortie du convertisseur via une diode et une bobine de filtrage, la ligne de sortie étant reliée à un condensateur de sortie, le transformateur d'isolement comprenant un deuxième enroulement secondaire qui a un sens opposé à l'enroulement primaire et qui est directement relié à la ligne de sortie via une diode.

Ainsi, pour les tensions moyennes à fortes, l'énergie est transmise vers la sortie via le premier enroulement secondaire, la diode et la bobine de filtrage, et via le second enroulement secondaire et la diode qui y est raccordée. Ceci permet de faire passer de fortes puissances. En revanche, lorsque la tension est faible, l'énergie emmagasinée dans le noyau magnétique du transformateur peut uniquement être transmise, à l'ouverture du commutateur de découpage, vers le condensateur de sortie via le deuxième enroulement secondaire et la diode y raccordée. Le deuxième enroulement secondaire permet donc d'évacuer l'énergie stockée dans le noyau magnétique vers la sortie et évite donc un gaspillage d'énergie. Il permet aussi d'assurer une consommation d'énergie, utilisée par la sortie, pour les tensions faibles (partie basse amplitude de la sinusoïde). De plus, le flux résiduel présent dans le noyau à l'ouverture du commutateur de découpage excite le deuxième enroulement secondaire qui évacue l'énergie correspondante vers la sortie, minimisant ainsi l'apparition de surtensions à l'ouverture du commutateur de découpage, surtensions qui risqueraient de détériorer le commutateur de découpage. Un seul étage de conversion permet ainsi de réaliser l'isolement galvanique et une fonction PFC de manière simple, fiable et efficace grâce à un rendement relativement élevé. En revanche, pour fonctionner, le transformateur doit être dimensionné avec une self magnétisante faible, comme dans une structure de type « Flyback » classique. Il en résulte que la quantité d'énergie transmissible par le premier enroulement est plus faible qu'avec une structure de type « Forward » classique car la pente et la valeur crête du courant sont élevées, ce qui induit des pertes par commutation dans les interrupteurs et par effet Joule dans les conducteurs, ainsi que des pertes dans les enroulements.

### OBJET DE L'INVENTION

Un but de l'invention est de proposer un perfectionnement au convertisseur du document précité.

### RESUME DE L'INVENTION

A cet effet, on prévoit, selon l'invention, UN Convertisseur alternatif / continu, comportant un enroulement primaire d'un transformateur d'isolement relié à un premier commutateur de découpage connecté à un circuit de commande par modulation de largeur d'impulsion, le transformateur d'isolement comprenant un premier enroulement secondaire qui est de sens identique à l'enroulement primaire et qui est relié à une ligne de sortie du convertisseur via une diode et une bobine de filtrage et un deuxième enroulement secondaire qui a un sens opposé à l'enroulement primaire et qui est relié directement à la ligne de sortie via une diode, la ligne de sortie étant reliée à un condensateur de sortie, l'enroulement primaire comprenant un point intermédiaire, relié à un deuxième commutateur de découpage connecté au circuit de commande, divisant l'enroulement primaire en une première partie et une deuxième partie, les commutateurs étant pilotés pour permettre une connexion de la deuxième partie seule ou des deux parties en fonction d'une présence de courant en sortie du premier enroulement secondaire, l'enroulement primaire ayant un nombre de spires total optimisé pour avoir avec le premier enroulement secondaire un fonctionnement de type « Forward ».

Ainsi, lorsque la tension d'entrée est inférieure au seuil de conduction du premier enroulement secondaire, le deuxième commutateur est piloté pour être passant et le deuxième enroulement secondaire accumule de l'énergie (fonctionnement en « Flyback »). Lorsque la tension d'entrée est supérieure au seuil de conduction du premier enroulement secondaire, le deuxième commutateur est bloqué et le premier commutateur est passant de sorte que le premier enroulement secondaire et le deuxième enroulement secondaire conduisent à chaque commutation du premier commutateur (fonctionnement en « Forward » pour le premier enroulement secondaire, permettant une transmission plus importante d'énergie, et fonctionnement en « Flyback » pour le deuxième enroulement secondaire).

D'autres caractéristiques et avantages de l'invention ressortiront à la lecture de la description qui suit d'un mode de réalisation particulier non limitatif de l'invention.

### BREVE DESCRIPTION DES DESSINS

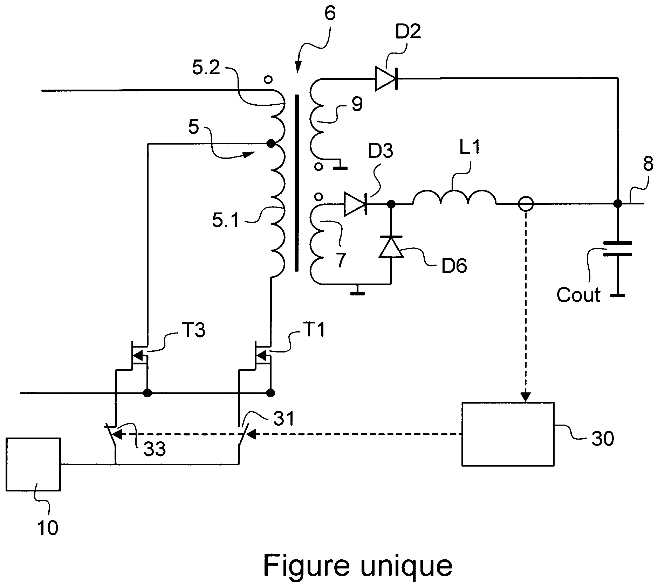

Il sera fait référence à la figure unique annexée représentant schématiquement le circuit d'un convertisseur conforme à l'invention.

### DESCRIPTION DETAILLEE DE L'INVENTION

L'invention concerne un perfectionnement au convertisseur alternatif / continu du document FR-A-2925790.

En référence à la figure, le convertisseur conforme à l'invention est destiné à être raccordé, en entrée, à un réseau de distribution électrique de courant alternatif et, en sortie, à au moins un équipement électronique fonctionnant en courant continu.

Le convertisseur comprend en entrée un circuit de filtrage relié à un circuit redresseur, qui sont connus en eux-mêmes et non représentés ici. Le circuit redresseur a une sortie reliée à un enroulement primaire 5 d'un transformateur d'isolement 6 en série avec un commutateur de découpage T1.

L'enroulement primaire 5 comprend un point intermédiaire qui est relié à un commutateur de découpage T3 et qui divise l'enroulement primaire 5 en une première partie 5.1 et une deuxième partie 5.2.

Les commutateurs de découpage T1 et T3 sont des transistors de puissance tels qu'un transistor à effet de champ à grille métal-oxyde ou MOSFET (de l'anglais « metal oxyde semiconductor field effect transistor ») ou un transistor bipolaire à grille isolée ou IGBT (de l'anglais « insulated gate bipolar transistor »). Les commutateurs de découpage T1 et T3 sont reliés à un circuit de commande ou, plus précisément, circuit de commande de découpage 10 qui sera décrit ci-après.

Le transformateur d'isolement 6 possède un premier enroulement secondaire 7 qui est de sens identique à l'enroulement primaire 5 et qui est relié en série à une ligne de sortie 8 du convertisseur via une diode D3 et une bobine de filtrage (couramment appelée inductance) L1. Une diode de roue libre D6 relie la masse à la bobine de filtrage L1 de façon connue en soi pour assurer la continuité du courant lorsque la diode D3 ne conduit pas (restitution de l'énergie de la bobine de filtrage L1).

Le transformateur d'isolement 6 possède un deuxième enroulement secondaire 9 qui a un sens opposé à l'enroulement primaire 5 et qui est relié via une diode D2 directement à la ligne de sortie 8, c'est-à-dire en aval de la bobine L1.

A la ligne de sortie 8, est en outre relié un condensateur de sortie Cₒᵤₜ.

Le circuit de commande de découpage 10 est un circuit de commande par modulation de largeur d'impulsion agencé pour commander les commutateurs de découpage T1 et T3 en fonction d'une comparaison d'une tension image d'un courant consommé en entrée du convertisseur avec un signal en forme de sinusoïde redressée double alternance ayant une amplitude dépendant d'une tension d'erreur entre une tension de sortie du convertisseur et une tension de référence. Le circuit de commande de découpage 10 est identique à celui du document FR-A-2925790.

La grille des commutateurs de découpage T1, T3 est reliée au circuit de commande de découpage 10 par des commutateurs 31, 33 pilotés en fonction d'une présence de courant en sortie de l'enroulement secondaire 7 pour qu'un seul desdits commutateurs T1, T3 puisse être connecté au circuit de commande de découpage 10. A cette fin, il est prévu un circuit de mesure 30 du courant en sortie de la bobine L1. Le circuit de mesure 30 est relié aux commutateurs 31, 33 pour commander ceux-ci. Ainsi, dans une première phase, lorsque le commutateur 33 est passant, le transistor 31 est bloquant et le découpage est assuré par le commutateur de découpage T3. Seule la partie 5.2 de l'enroulement primaire est alors alimentée. A l'inverse, dans une deuxième phase, lorsque le commutateur 31 est passant, le transistor 33 est bloquant et le découpage est assuré par le commutateur de découpage T1. L'ensemble de l'enroulement primaire (parties 5.1 et 5.2) est alimenté.

La partie 5.2 de l'enroulement primaire 5 a une valeur de self optimisée pour que la partie 5.2 puisse avoir dans la première phase un fonctionnement en « Flyback » pur avec l'enroulement secondaire 9. La partie 5.1 de l'enroulement primaire 5 a une valeur de self optimisée pour qu'un fonctionnement du transformateur 6 en « Forward » puisse être privilégié dans la deuxième phase. Le nombre de spires de la partie 5.2 est déterminé pour que la partie 5.2 ait une self magnétisante relativement faible pour autoriser le fonctionnement en « Flyback ». Le nombre de spires de la partie 5.1 est plus important que le nombre de spires de la partie 5.2 de manière que le nombre de spires cumulé des parties 5.1, 5.2 permettent l'obtention d'une self magnétisante adaptée au fonctionnement en « Forward ».

Le fonctionnement du convertisseur conforme à l'invention va maintenant être décrit et est globalement conforme à celui du document FR-A-2925790 sauf en ce qui concerne la commande des commutateurs de découpage T1 et T3.

Le principe du convertisseur consiste à commander en modulation de largeur d'impulsion les commutateurs de découpage T1 et T3 de manière à forcer le courant consommé à suivre une forme d'onde identique à celle de la tension à savoir une sinusoïde redressée double alternance.

Lorsque la tension sinusoïdale d'entrée est faible (tension de sortie inférieure à un seuil égal au produit de la tension d'entrée et du rapport de transformation), c'est le commutateur de découpage T3 qui est commandé par le circuit de commande de découpage 10. A l'ouverture de ce commutateur, l'énergie stockée dans le noyau magnétique du transformateur d'isolement 6 excite le deuxième enroulement secondaire 9 et est transmise vers la ligne de sortie 8 à travers la diode D2. Le fonctionnement du convertisseur s'apparente alors à celui d'un convertisseur du type FLYBACK, permettant d'assurer une consommation d'énergie, utilisée par la sortie, pendant les phases de basse amplitude de la tension sinusoïdale redressée.

Lorsque la tension de sortie a augmenté jusqu'à atteindre un seuil égal au produit de la tension d'entrée et du rapport de transformation, la diode D3 conduit et l'énergie du noyau magnétique est transférée vers la ligne de sortie par le premier enroulement 7, la diode D3 et la bobine de filtrage L1. Ce courant est détecté et la connexion du circuit de commande de découpage 10 au commutateur de découpage T1 est commandé par le circuit de mesure 30. Le fonctionnement du convertisseur met en oeuvre la totalité de l'enroulement primaire 5 et s'apparente à un fonctionnement type FORWARD. Le convertisseur a également alors un mode minoritaire de fonctionnement de type FLYBACK qui contribue à la décharge complète du noyau magnétique du transformateur d'isolement.

On est donc en présence d'un système auto-oscillant asservi sur l'amplitude de la tension d'erreur elle-même en forme de sinusoïde redressé double alternance, permettant d'obtenir une tension de sortie précise et un courant consommé sinusoïdal.

En option, le transformateur d'isolement 6 possède un troisième enroulement secondaire qui est de même sens que l'enroulement primaire 5 et qui est relié via une diode :
- à la ligne de sortie 8,
- à une bobine de filtrage qui est couplée à la bobine de filtrage L1 et qui est en série avec un condensateur d'accumulation d'énergie,
- à un commutateur de décharge piloté par un circuit de commande de décharge en fonction d'un niveau de charge du condensateur d'accumulation d'énergie. Le circuit de commande de décharge 12 est identique à celui du document FR-A-2925790.

Le condensateur d'accumulation d'énergie est un supercondensateur de très forte capacité, de l'ordre de quelques centaines de farads. La capacité et le nombre de condensateurs d'accumulation d'énergie sont déterminés en fonction de la quantité d'énergie dont on souhaite disposer en cas d'interruption de l'alimentation. Le commutateur de décharge T2 est du même type que le commutateur de découpage T1.

Le condensateur d'accumulation d'énergie est chargé (lorsque le convertisseur a un mode de fonctionnement de type FORWARD) par l'intermédiaire du troisième enroulement secondaire et de la diode associée. Les bobinés de filtrage couplées, assurent une limitation des pics de courant de charge et une régulation approximative de la tension de charge. Une disparition de la tension d'alimentation est détectée par le circuit de commande de décharge qui pilote le commutateur de décharge en modulation de largeur d'impulsion. L'ensemble bobine de filtrage couplée et condensateur d'accumulation d'énergie fonctionne alors en élévateur de tension avec une valeur résultante asservie à la valeur de consigne de fonctionnement normal d'utilisation. Le circuit de commande de décharge est agencé pour ajuster le rapport cyclique de sa commande au niveau de charge du condensateur d'accumulation d'énergie.

Bien entendu, l'invention n'est pas limitée au mode de réalisation décrit mais englobe toute variante entrant dans le cadre de l'invention telle que définie par les revendications.

En particulier, la réserve d'énergie est facultative.

## Revendications

1. Convertisseur alternatif / continu, comportant un enroulement primaire (5) d'un transformateur d'isolement (6) relié à un premier commutateur de découpage (T1) connecté à un circuit de commande (10) par modulation de largeur d'impulsion, le transformateur d'isolement comprenant un premier enroulement secondaire (7) qui est de sens identique à l'enroulement primaire et qui est relié à une ligne de sortie (8) du convertisseur via une diode ( D3 ) et une bobine de filtrage (L1) et un deuxième enroulement secondaire (9) qui a un sens opposé à l'enroulement primaire et qui est relié directement à la ligne de sortie via une diode (D2), la ligne de sortie étant reliée à un condensateur de sortie (Cₒᵤₜ), **caractérisé en ce que** l'enroulement primaire comprend un point intermédiaire, relié à un deuxième commutateur de découpage (T3) connecté au circuit de commande, divisant l'enroulement primaire en une première partie (5.1) et une deuxième partie (5.2), les commutateurs étant pilotés pour permettre une connexion de la deuxième partie seule ou des deux parties en fonction d'une présence de courant en sortie du premier enroulement secondaire, l'enroulement primaire ayant un nombre de spires total optimisé pour avoir avec le premier enroulement secondaire un fonctionnement de type « Forward ».

## Patentansprüche

1. Wechselstrom-/Gleichstromwandler, umfassend eine Primärwicklung (5) eines Isolationstransformators (6), die mit einem ersten Trennschalter (T1) verbunden ist, der an einen Steuerkreis (10) zur Steuerung mittels Pulsbreitenmodulation angeschlossen ist, wobei der Isolationstransformator eine erste Sekundärwicklung (7) umfasst, die eine zur Primärwicklung identische Wicklungsrichtung hat und die über eine Diode (D3) und eine Glättungsdrossel (L1) mit einer Ausgangsleitung (8) des Wandlers verbunden ist, sowie eine zweite Sekundärwicklung (9), die eine zur Primärwicklung entgegengesetzte Wicklungsrichtung hat und die über eine Diode (D2) direkt mit der Ausgangsleitung verbunden ist, wobei die Ausgangsleitung mit einem Ausgangskondensator (Cₒᵤₜ) verbunden ist, **dadurch gekennzeichnet, dass** die Primärwicklung einen Zwischenpunkt umfasst, der mit einem zweiten Trennschalter (T3) verbunden ist, der an den Steuerkreis angeschlossen ist, und der die Primärwicklung in einen ersten Teil (5.1) und einen zweiten Teil (5.2) unterteilt, wobei die Schalter so gesteuert werden, dass sie eine Verbindung nur des zweiten Teils oder beider Teile in Abhängigkeit eines Vorhandenseins eines Stroms am Ausgang der ersten Sekundärwicklung ermöglichen, wobei die Primärwicklung eine optimierte Gesamtwindungszahl hat, um mit der ersten Sekundärwicklung einen "Durchlass"-Betrieb zu haben.

## Claims

1. AC/DC converter, comprising a primary winding (5) of an isolating transformer (6), which primary winding (5) is connected to a first chopper switch (T1) which is connected to a pulse-width modulation control circuit (10), the isolating transformer comprising a first secondary winding (7) which is wound in the same direction as the primary winding and which is connected to an output line (8) of the converter via a diode (D3) and a filtering coil (Ll), and a second secondary winding (9) which is wound in the opposite direction from the primary winding and which is connected directly to the output line via a diode (D2), the output line being connected to an output capacitor (Cₒᵤₜ), **characterised in that** the primary winding comprises an intermediate point which is connected to a second chopper switch (T3) connected to the control circuit and which divides the primary winding into a first portion (5.1) and a second portion (5.2), the switches being controlled to enable either the second portion alone or both portions to be connected as a function of the presence of current at the output of the first secondary winding, the primary winding having a total number of turns which is optimised to produce, with the first secondary winding, operation of the forward type.
